(19) Europäisches Patentamt
European Patent Office
Office européen des brevets

(11) **EP 2 809 559 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **13701110.2**

(22) Anmeldetag: **25.01.2013**

(51) Int Cl.:
**B60T 17/18** (2006.01)  **B60T 8/40** (2006.01)

(86) Internationale Anmeldenummer:
**PCT/EP2013/051436**

(87) Internationale Veröffentlichungsnummer:
**WO 2013/113625 (08.08.2013 Gazette 2013/32)**

(54) **VERFAHREN ZUM BETRIEB EINER BREMSANLAGE FÜR KRAFTFAHRZEUGE SOWIE BREMSANLAGE**

METHOD FOR OPERATING A BRAKE SYSTEM FOR MOTOR VEHICLES, AND BRAKE SYSTEM

PROCEDE POUR FAIRE FONCTIONNER UN SYSTEME DE FREINAGE DE VEHICULES À MOTEUR ET SYSTEME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2012 DE 102012201515**

(43) Veröffentlichungstag der Anmeldung:
**10.12.2014 Patentblatt 2014/50**

(73) Patentinhaber: **Continental Teves AG&Co. Ohg 60488 Frankfurt (DE)**

(72) Erfinder:
• **BÖHM, Jürgen**
  **65558 Oberneisen (DE)**

• **JUNGBECKER, Johann**
  **55576 Badenheim (DE)**
• **DRUMM, Stefan A.**
  **55291 Saulheim (DE)**
• **BESIER, Marco**
  **65307 Bad Schwalbach (DE)**
• **BILLER, Harald**
  **65760 Eschborn (DE)**
• **PENZAR, Zlatko**
  **60529 Frankfurt (DE)**
• **FÜHRER, Jochen**
  **64287 Darmstadt (DE)**
• **LINKENBACH, Steffen**
  **65760 Eschborn (DE)**

(56) Entgegenhaltungen:
**WO-A1-2011/029812   JP-A- 2007 069 649**

**Beschreibung**

Die Erfindung betrifft ein Verfahren gemäß Oberbegriff von Anspruch 1 und eine Bremsanlage gemäß Oberbegriff von Anspruch 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der internationalen Patentanmeldung WO 2011/029812 A1 ist eine "Brake-by-wire"-Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In einer Rückfallbetriebsart werden die Radbremsen mittels des Bremspedal betätigbaren Hauptbremszylinders mit Druck beaufschlagt. In der Anmeldung werden keine näheren Ausführungen dazu gemacht, ob und gegebenenfalls wie ein Übergang von der Rückfallbetriebsart in die "Brake-by-wire"-Betriebsart durchgeführt werden kann.

Es ist Aufgabe der vorliegenden Erfindung, ein Verfahren zum Betrieb einer Bremsanlage sowie eine Bremsanlage bereitzustellen, welches/welche dem Fahrzeugführer ein gleichbleibendes Bremspedalgefühl, insbesondere auch bei einem Übergang von einer Betriebsart in eine Betriebsart der Bremsanlage, bereitstellt. Insbesondere soll dem Fahrer der Falle eines Starts oder Neustarts der Bremsanlage das gewohnte Bremspedalgefühl sowie die Bremskraftverstärkte "Brake-by-wire"-Betreibsart möglichst schnell und komfortabel bereitgestellt werden.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, dass bei einem Übergang von dem zweiten Betriebsmodus in den ersten Betriebsmodus während einer Betätigung des Bremspedals ein elektronisch gesteuertes oder geregeltes Verstellen des Betätigungswegs des Bremspedals durchführt wird.

Bevorzugt wird bei dem Übergang von dem zweiten Betriebsmodus in den ersten Betriebsmodus während einer Betätigung des Bremspedals der Betätigungsweg des Bremspedals durch elektronisch gesteuertes oder geregeltes Ablassen von Druckmittel aus dem Hauptbremszylinder oder durch elektronisch gesteuertes oder geregeltes Zuführen von Druckmittel in den Hauptbremszylinder verstellt. Dies kann anhand der vorhandenen Komponenten der Bremsanlage, d.h. ohne zusätzliche Komponenten, durchgeführt werden.

Gemäß einer bevorzugten Ausführungsform des erfindungsgemäßen Verfahrens sind eine erste Kennlinie, welche einen Zusammenhang zwischen erster und zweiter Größe in dem ersten Betriebsmodus beschreibt, und eine zweite Kennlinie, welche einen Zusammenhang zwischen erster und zweiter Größe in dem zweiten Betriebsmodus beschreibt, vorgegebenen und eine Entscheidung, ob ein Ablassen oder ein Zuführen von Druckmittel durchgeführt wird, wird anhand eines Vergleichs von aktuellen Werte der ersten und zweiten Größe mit der ersten Kennlinie und/oder der zweiten Kennlinie getroffen. Der Betätigungsweg wird besonders bevorzugt auf einen Wert entsprechend der ersten Kennlinie verstellt.

Bevorzugt wird der Betätigungsweg durch Zuführen von Druckmittel verringert, wenn das Wertepaar aus erster und zweiter Größe nach einem Zuschalten des Pedalwegsimulators unterhalb der zweiten Kennlinie liegt, um das in den Pedalwegsimulator abgeflossene Druckmittelvolumen auszugleichen.

Bevorzugt wird der Betätigungsweg durch Ablassen von Druckmittel vergrößert, wenn das Wertepaar aus erster und zweiter Größe nach einem Zuschalten des Pedalwegsimulators oberhalb der ersten Kennlinie liegt, um das aus der/den Radbremse(n) stammende Druckmittelüberschussvolumen auszugleichen.

Bei dem Übergang von dem zweiten in den ersten Betriebsmodus werden bevorzugt zunächst die Sensoren zur Messung der ersten und der zweiten Größe initialisiert und danach der Pedalwegsimulator mittels des Simulator-Freigabeventils angeschaltet. Änderungen der Werte der ersten und der zweiten Größe während des Zuschaltens des Pedalwegsimulators können so beobachtet und ausgewertet werden. Nach dem Zuschalten des Pedalwegsimulators ist der Fahrer sowohl mit dem Pedalwegsimulator als auch mit dem/den Bremskreis(en) hydraulisch verbunden, so dass sich ein Druckgleichgewicht herstellen kann. Besonders bevorzugt wird nach dem Zuschalten des Pedalwegsimulators das Verstellen des Betätigungswegs des Bremspedals durchgeführt.

Bevorzugt wird das Verfahren in einer Bremsanlage mit zwei oder mehr Bremskreisen durchgeführt, bei welcher jeder Bremskreis über eine hydraulische Verbindungsleitung mit einem, vorteilhafterweise stromlos offenen, Trennventil mit dem Hauptbremszylinder und über eine weitere hydraulische Verbindungsleitung mit einem, vorteilhafterweise stromlos geschlossenen, Zuschaltventil mit der Druckbereitstellungseinrichtung verbunden ist.

Die Bremsanlage umfasst bevorzugt weiterhin eine Radbremsdruck-Modulationseinheit, die je Radbremse ein Einlassventil sowie ein Auslassventil zum Einstellen eines radindividuellen Bremsdrucks aufweist, der aus dem Druck in dem Bremskreis abgeleitet wird. Besonders bevorzugt leiten im nicht angesteuerten Zustand die Einlassventile die jeweiligen Bremskreisdrücke weiter. Ebenso sind die Auslassventile im nicht angesteuerten Zustand gesperrt.

Gemäß einer Weiterbildung des erfindungsgemäßen Verfahrens wird der Betätigungsweg des Bremspedals dadurch verringert, dass ein zwischen der Druckbereitstellungseinrichtung und dem Bremskreis angeordnetes Zuschaltventil geöffnet und die Druckbereitstellungseinrichtung derart angesteuert wird, dass Druckmittelvolumen in den Hauptbremszylinder verschoben wird. Es wird also die Druckbereitstellungseinrichtung mit dem Bremskreis und damit dem Hauptbremszylinder verbunden, so dass dann Druckmittel mittels der Druckbereitstellungseinrichtung über das geöffnete Zuschaltventil und die offene Verbindung zwischen Bremskreis und Hauptbremszylinder in den Hauptbremszylinder geführt werden kann, wodurch die Pedalposition korrigiert bzw. der Betätigungsweg des Bremspedals verstellt wird. Besonders bevorzugt wird der Betätigungsweg derart verstellt, wenn das Wertepaar aus erster und zweiter Größe nach dem Zuschalten des Pedalwegsimulators unterhalb der zweiten Kennlinie liegt.

Gemäß einer Weiterbildung des erfindungsgemäßen Verfahrens wird der Betätigungsweg des Bremspedals dadurch vergrößert, dass ein zwischen einer Radbremse und einem Druckmittelvorratsbehälter angeordnetes Auslassventil geöffnet wird. Hierdurch kann das aus der/den Radbremse(n) stammende Druckmittelüberschussvolumen in den Druckmittelvorratsbehälter abfließen. Besonders bevorzugt wird der Betätigungsweg derart verstellt, wenn das Wertepaar aus erster und zweiter Größe nach dem Zuschalten des Pedalwegsimulators oberhalb der ersten Kennlinie liegt.

Bevorzugt wird die Druckbereitstellungseinrichtung durch eine Zylinder-Kolben-Anordnung gebildet, deren Kolben durch einen elektromechanischen Aktuator betätigbar ist.

Gemäß einer bevorzugten Ausführungsform des erfindungsgemäßen Verfahrens wird zusätzlich, vorteilhafterweise gleichzeitig, zum Öffnen des Auslassventils ein zwischen der Druckbereitstellungseinrichtung und dem Bremskreis angeordnetes Zuschaltventil geöffnet. So kann ein Druckausgleich zwischen den Komponenten Druckbereitstellungseinrichtung, Bremskreis(en) und Hauptbremszylinder stattfinden. Besonders bevorzugt wird zusätzlich, vorteilhafterweise gleichzeitig, der Kolben der Druckbereitstellungseinrichtung auf eine vorbestimmte Kolbenposition eingestellt. Der Kolben befindet sich dann an der für den ersten Betriebsmodus richtigen Position. Die vorbestimmte Kolbenposition kann einfach gemäß einer vorgegebenen Kolbenposition-Druck-Kennlinie bestimmt werden, wobei die aktuell gemessene erste Größe berücksichtigt wird.

Nach dem Verstellen des Betätigungswegs des Bremspedals wird bevorzugt ein zwischen dem Hauptbremszylinder und dem Bremskreis angeordnetes Trennventil geschlossen und danach durch die Druckbereitstellungseinrichtung ein vorbestimmter Solldruck eingestellt. Die Bremsanlage befindet sich dann in dem ersten Betriebsmodus, wobei der Fahrer das gewohnte Bremspedalgefühl erfährt. Besonders bevorzugt wird der Solldruck anhand der aktuellen Werte der ersten und zweiten Größe bestimmt.

Gemäß einer bevorzugten Weiterbildung des erfindungsgemäßen Verfahrens wird kein Verstellen des Betätigungswegs des Bremspedals durchgeführt, wenn der aktuelle Wert der zweiten Größe kleiner als ein vorgegebener erster Schwellenwert ist. In diesen Fällen ist die Betätigung des Bremspedals durch den Fahrer so gering, dass Abweichungen vom gewohnten Bremspedalgefühl nicht störend sind. Besonders bevorzugt wird zusätzlich zum aktuellen Wert der zweiten Größe der aktuelle Wert der ersten Größe herangezogen. Es wird dann kein Verstellen des Betätigungswegs des Bremspedals durchgeführt, wenn der aktuelle Wert der zweiten Größe kleiner als der vorgegebene erste Schwellenwert ist und der aktuelle Wert der ersten Größe kleiner als ein vorgegebener zweiter Schwellenwert ist.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Die Erfindung betrifft auch eine Bremsanlage, in deren Steuer- und Regeleinheit bei einem Übergang von dem zweiten Betriebsmodus in den ersten Betriebsmodus während einer Betätigung des Bremspedals Verstellen des Betätigungswegs des Bremspedals durchgeführt wird. Weiter betrifft die Erfindung eine Bremsanlage, in deren elektronischen Steuer- und Regeleinheit ein erfindungsgemäßes Verfahren durchgeführt wird.

Weitere bevorzugte Ausführungsformen der Erfindung ergeben sich aus den Unteransprüchen und der nachfolgenden Beschreibung anhand von Figuren.

Es zeigen schematisch

Fig. 1 eine beispielgemäße Bremsanlage,

Fig. 2 beispielhafte Zusammenhänge zwischen dem Druck im Hauptbremszylinder und dem Betätigungsweg des Bremspedals für zwei verschiedene Betriebsmodi der beispielgemäßen Bremsanlage aus Fig. 1,

Fig. 3 ein schematisches Ablaufdiagramm zur Veranschaulichung eines beispielgemäßen Verfahrens zum Betrieb der beispielgemäßen Bremsanlage aus Fig. 1,

Fig. 4    Diagramm für den Pedalweg und den zugehörigen Druck zur Veranschaulichung eines ersten beispielgemäßen Verfahrens,

Fig. 5    Diagramm für den Pedalweg und den zugehörigen Druck zur Veranschaulichung eines zweiten beispielgemäßen Verfahrens,

Fig. 6    eine beispielsgemäße Kennlinie einer Druckbereitstellungseinrichtung.

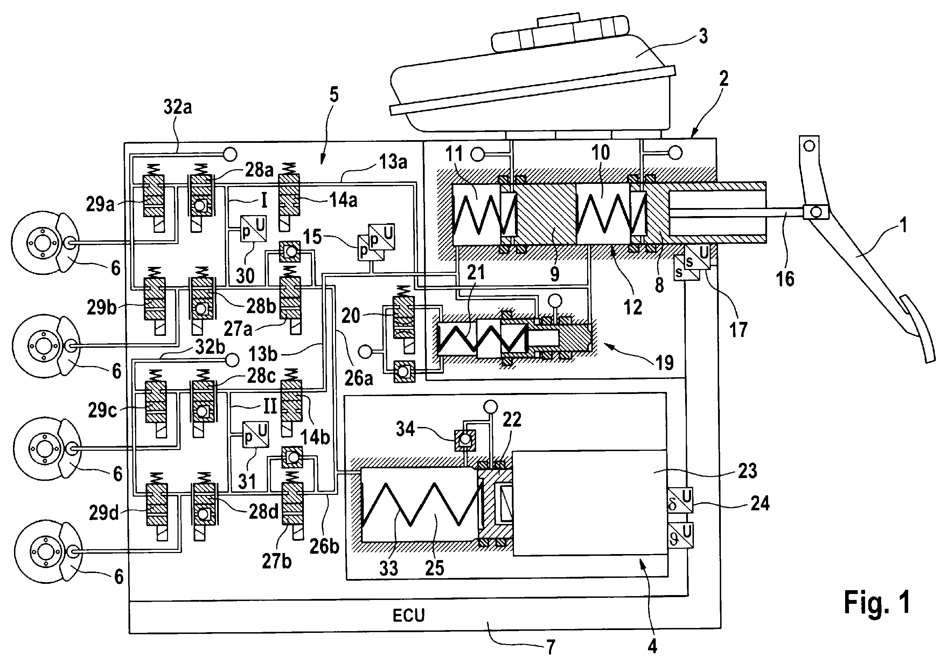

In Fig. 1 ist eine beispielsgemäße Bremsanlage schematisch dargestellt. Die Bremsanlage umfasst eine Betätigungseinrichtung 2, welche mittels eines Betätigungs- bzw. Bremspedals 1 durch einen Fahrzeugführer betätigbar ist, einen der Betätigungseinrichtung 2 zugeordneten Druckmittelvorratsbehälter 3, eine elektrisch steuerbare Druckbereitstellungseinrichtung 4, eine elektrisch steuerbare Druckmodulationseinrichtung 5, an deren Ausgangsanschlüsse Radbremsen 6 eines nicht dargestellten Kraftfahrzeuges angeschlossen sind, und eine elektronische Steuer- und Regeleinheit 7 (ECU: electronic control unit), die der Verarbeitung von Sensorsignalen und der Ansteuerung der elektrisch steuerbaren Komponenten dient.

Betätigungseinrichtung 2 umfasst einen zweikreisigen Hauptbremszylinder bzw. Tandemhauptzylinder 12 mit zwei in einem (Hauptbremszylinder-)Gehäuse hintereinander angeordneten hydraulischen Kolben 8, 9, welche hydraulische Druckkammern 10, 11 begrenzen. Die Druckkammern 10, 11 stehen über in den Kolben 8, 9 ausgebildete radiale Bohrungen mit dem Druckmittelvorratsbehälter 3 in Verbindung, wobei diese Bohrungen durch eine Relativbewegung der Kolben 8, 9 im Gehäuse absperrbar sind. Außerdem ist jede Druckkammer 10, 11 mittels einer hydraulischen Leitung 13a, 13b mit einem Bremskreis I, II mit je zwei Radbremskreisen mit hydraulisch betätigbaren Radbremsen 6 verbunden. In den hydraulischen Leitungen 13a, 13b ist je ein Trennventil 14a, 14b eingefügt, das als ein elektrisch betätigbares, vorzugsweise stromlos offenes, 2/2-Wegeventil ausgebildet ist. Ein an den Druckraum 11 angeschlossener, vorzugsweise redundant ausgeführter, Drucksensor 15 erfasst den im Druckraum 11 durch ein Verschieben des zweiten Kolbens 9 aufgebauten Druck $P_{THZ}$, welcher der vom Fahrer erzeugten Pedalkraft entspricht. Außerdem nehmen die Druckkammern 10, 11 nicht näher bezeichnete Rückstellfedern auf, die die Kolben 8, 9 entgegen der Betätigungsrichtung vorspannen. Eine am Bremspedal 1 angekoppelte Kolbenstange 16 wirkt mit dem ersten (Hauptzylinder-)Kolben 8 zusammen, wobei eine den Betätigungsweg des Bremspedals 1 charakterisierende Größe $S_{Pedal}$, z.B. der Betätigungsweg oder -winkel des Bremspedals 1 selbst oder der Betätigungsweg des mit dem Bremspedal gekoppelten Kolbens 8, von einem, vorzugsweise redundant ausgeführten, Wegsensor 17 erfasst wird.

Betätigungseinrichtung 2 umfasst weiter einen Pedalwegsimulator (auch Pedalgefühlsimulatoreinrichtung genannt) 19, welcher mit dem Hauptbremszylinder 12 zusammenwirkt und dem Fahrzeugführer in einem ersten Betriebsmodus (einer sogenannten "Brake-by-wire"-Betriebsart) ein angenehmes Pedalgefühl vermittelt. Pedalwegsimulator 19 ist hydraulisch betätigbar und mit zumindest einer Druckkammer 10, 11 des Hauptbremszylinders 12 verbunden. Pedalwegsimulator 19 ist mittels eines elektrisch betätigbaren Simulatorfreigabeventils 20 zu- und abschaltbar.

Pedalwegsimulator 19 besteht beispielsgemäß im Wesentlichen aus zwei Simulatorkammern, einer Simulatorfederkammer mit Simulatorfeder 21 sowie einem diese Kammern voneinander trennenden Simulatorkolben (Stufenkolben). Dabei sind die Simulatorkammern an jeweils eine Druckkammer 10, 11 des Hauptbremszylinders 12 angeschlossen, während die Simulatorfederkammer unter Zwischenschaltung des Simulatorfreigabeventils 20 mit dem Druckmittelvorratsbehälter 3 verbindbar ist. Ein dem Simulatorfreigabeventil 20 parallel geschaltetes Rückschlagventil ist an die Simulatorfederkammer angeschlossen und ermöglicht unabhängig vom Schaltzustand des Simulatorfreigabeventils 20 und unabhängig von einer Drosselwirkung der hydraulischen Simulator-Abströmverbindungen ein weitgehend ungedrosseltes Einströmen des Druckmittels in die Simulatorfederkammer. Das Simulatorfreigabeventil 20 ist als ein elektrisch betätigbares, vorzugsweise stromlos geschlossenes, 2/2-Wegeventil ausgebildet.

Die elektrohydraulische Druckbereitstellungseinrichtung 4 ist als eine hydraulische Zylinder-Kolben-Anordnung ausgebildet, deren Kolben 22 von einem schematisch angedeuteten Elektromotor 23 unter Zwischenschaltung eines nicht dargestellten Rotations-Translationsgetriebes betätigbar ist. Der Elektromotor 23 sowie das Rotations-Translations-Getriebe bilden einen Linearaktuator, wobei zur Erfassung einer für die Position/Lage des Kolbens 22 der Druckbereitstellungseinrichtung 4 charakteristischen Größe ein Sensor 24 vorhanden ist, welcher beispielsgemäß als ein der Erfassung der Rotorlage des Elektromotors 23 dienender Rotorlagensensor 24 ausgeführt ist. Weitere Sensoren, wie beispielsweise ein Temperatursensor, liefern der elektronischen Steuer- und Regeleinheit 7 Zustandsinformationen zum Elektromotor 23 bzw. zum Linearaktuator. Kolben 22 begrenzt einen Druckraum 25, welcher über hydraulische Leitungen 26a, 26b mit je einem elektrisch betätigbaren Zuschaltventil 27a, 27b mit den Bremskreisen I, II verbindbar ist. Dabei ist den Zuschaltventilen 27a, 27b je ein zu dem Druckraum 25 hin schließendes Rückschlagventil parallel geschaltet. Außerdem steht Druckraum 25 über ein zum Druckmittelvorratsbehälter 3 schließendes Rückschlagventil 34 mit diesem in Verbindung. Die Zuschaltventile 27a, 27b sind als elektrisch betätigbare, vorzugsweise stromlos geschlossene, 2/2-Wegeventile ausgebildet. In Druckraum 25 ist eine Feder 33 angeordnet, welche den Kolben 22 entgegen der Druckaufbaurichtung belastet.

Zur Modulation des Druckes an den Radbremsen 6 umfasst die hydraulische Druckmodulationseinrichtung 5 beispielsgemäß je Radbremse 6 ein Einlassventil 28a-28d und ein Auslassventil 29a-29d. Die Eingangsanschlüsse der Einlassventile 28a-28d bzw. die Bremskreise I, II können mit dem Druck des Hauptbremszylinders 12 (über die Leitungen 13a, 13b mit den Trennventilen 14a, 14b) oder dem Druck der Druckbereitstellungseinrichtung 4 (über die Leitungen 26a, 26b mit den Zuschaltventilen 27a, 27b) versorgt werden. Die Ausgangsanschlüsse der Auslassventile 29a-29d sind über Rücklaufleitungen 32a, 32b mit dem drucklosen Druckmittelvorratsbehälter 3 verbunden (sogenanntes offenes System). Ergänzend ist noch zu erwähnen, dass sämtliche kreisförmigen Symbole zum Druckmittelvorratsbehälter 3 führende hydraulische Leitungen darstellen. Vorteilhafterweise sind die Einlassventile 28a-28d als elektrisch betätigbare, stromlos offene Druckregelventile und die Auslassventile 29a-29d als elektrisch betätigbare, stromlos geschlossene 2/2-Wegeventile ausgebildet.

Beispielsgemäß ist in jedem Bremskreis I, II ein Drucksensor 30, 31 zum Erfassen des an den Eingangsanschlüsse der zugehörigen Einlassventile 28a, 28b; 28c, 28d herrschenden Drucks angeordnet. Alternativ ist es denkbar, dass in nur einem der beiden Bremskreise I, II ein Drucksensor angeordnet ist oder dass ein Drucksensor in der Leitung 26a, 26b zwischen Druckraum 25 und Zuschaltventilen 27a, 27b angeordnet ist. Mittels dieses Drucksensors oder dieser Drucksensoren ist es möglich, den Druck $P_{ist}$ der Druckbereitstellungseinrichtung 4 (bei geschlossenen Trennventilen 14a, 14b) zu bestimmen.

In einem ersten Betriebsmodus $Z_A$ (einer sogenannten "Brake-by-wire"-Betriebsart mit Bremskraftverstärkung) werden die Bremskreise I, II mit dem Druck der Druckbereitstellungseinrichtung 4 beaufschlagt. Hierzu sind beispielsgemäß die Zuschaltventile 27a, 27b geöffnet, so dass die Druckbereitstellungseinrichtung 4 mit den Bremskreisen I, II hydraulisch verbunden ist. Hauptbremszylinder 12 ist mittels der geschlossenen Trennventile 14a, 14b von den Bremskreisen I, II bzw. Radbremsen 6 getrennt. Simulatorfreigabeventil 20 ist geöffnet, so dass Pedalwegsimulator 19 zu- bzw. angeschaltet ist. Im Falle einer Betätigung $S_{Pedal}$ des Bremspedals 1 wird Druckmittelvolumen aus den Druckkammern 10, 11 des Hauptbremszylinders 12 in die Simulatorkammern des Pedalwegsimulators 19 verschoben. Druckbereitstellungseinrichtung 4 wird mittels der elektronischen Steuer- und Regeleinheit 7 angesteuert, um einen Solldruck $P_{Soll}$ zur Beaufschlagung der Bremskreise I, II zu bereitzustellen. Der Wert für den Solldruck $P_{Soll}$ der Druckbereitstellungeinrichtung 4 wird, z.B. in der elektronischen Steuer- und Regeleinheit 7, anhand einer vorgegebenen Bremskraftverstärkungsfunktion und des, z. B. mittels der Sensoren 15 und 17, bestimmten Fahrerbremswunsches ($S_{Pedal}$, $P_{THZ}$) berechnet.

Beispielsgemäß wird der Solldruck $P_{Soll}$ gemäß der folgenden Formel aus den gemessenen Größen $P_{THZ}$ und $S_{Pedal}$ bestimmt:

$$P_{Soll} = \lambda_S * f_S(S_{Pedal}) + \lambda_P * f_P(P_{THZ})$$

wobei bedeutet:

$f_S$: Bremsdruck-Verstärkungsfunktion in Abhängigkeit von dem Pedalweg $S_{Pedal}$,

$f_P$: Bremsdruck-Verstärkungsfunktion in Abhängigkeit vom Druck $P_{THZ}$,

$\lambda_S$: Gewichtungsfaktor bzw. Gewichtungsfunktion für Druckanteil $f_S$, und

$\lambda_P$: Gewichtungsfaktor bzw. Gewichtungsfunktion für Druckanteil $f_P$.

Der Solldruck $P_{Soll}$ wird also durch eine gewichtete Überlagerung eines auf der Pedal-/Kolbenweggröße $S_{Pedal}$ basierenden Druckanteils $f_S$ sowie eines auf der Druckgröße $P_{THZ}$ basierten Druckanteils $f_P$ ermittelt. Die Gewichtungsfaktoren können jeweils z.B. Werte zwischen Null und Eins annehmen. Durch entsprechende Vorgabe bzw. Definition und Parameterwahl bezüglich der vorgegebenen Bremsdruck-Verstärkungsfunktionen $f_S$, $f_P$ und der vorgegebenen Gewichtungsfaktoren $\lambda_S$, $\lambda_P$ ist eine spezifische Anpassung der Solldruck-Berechnung an die vorliegende Bremsanlage und die Wünsche bezüglich der Auslegung der Bremsanlage möglich.

In einem zweiten Betriebsmodus $Z_P$ (einer sogenannten Rückfallbetriebsart) werden die Bremskreise I, II mit dem Druck des Hauptbremszylinders 12 beaufschlagt. Hierzu sind die Trennventile 14a, 14b geöffnet, so dass der Hauptbremszylinder 12 mit den Bremskreisen I, II hydraulisch verbunden ist. Druckbereitstellungseinrichtung 4 ist mittels der geschlossenen Zuschaltventile 27a, 27b von den Bremskreisen I, II bzw. Radbremsen 6 getrennt. Simulatorfreigabeventil 20 ist geschlossen, so dass Pedalwegsimulator 19 abgeschaltet ist. Im Falle einer Betätigung $S_{Pedal}$ des Bremspedals 1 wird Druckmittelvolumen aus den Druckkammern 10, 11 des Hauptbremszylinders 12 in die Bremskreise I, II bzw. Radbremsen 6 verschoben.

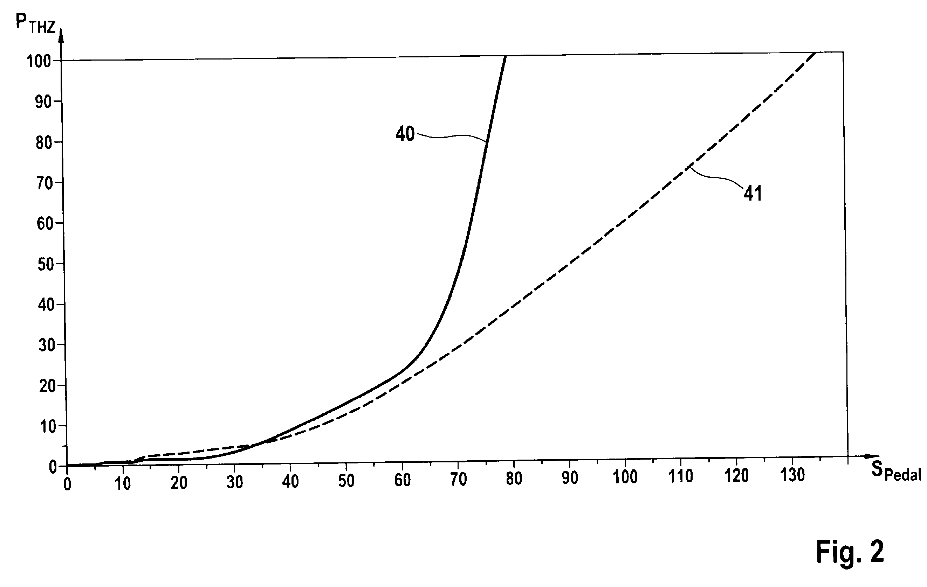

In Fig. 2 sind beispielsgemäße Zusammenhänge zwischen dem Druck $P_{THZ}$ im Hauptbremszylinder 12 und dem zugehörigen Betätigungsweg $S_{Pedal}$ für die beiden Betriebsmodi $Z_A$, $Z_P$ schematisch dargestellt. Aufgetragen ist der Druck $P_{THZ}$ gegen den Betätigungsweg $S_{Pedal}$, wobei Kennlinie 40 den ersten Betriebsmodus $Z_A$ und Kennlinie 41 den zweiten Betriebsmodus $Z_P$ darstellt. Kennlinie 40 bzw. 41 stellt den nominellen Zusammenhang zwischen dem Druck $P_{THZ}$ und dem Betätigungsweg $S_{Pedal}$ in dem jeweiligen Betriebsmodus $Z_A$ bzw. $Z_P$ dar. Beispielsgemäß sind entsprechende Kennlinien 40, 41 für die beiden Betriebsmodi $2_A$, $2_P$ in der elektronischen Steuer- und Regeleinheit 7 abgespeichert.

Die nominelle Pedalkennlinie der Bremsanlage im ersten Betriebsmodus $Z_A$, d.h. der Zusammenhang zwischen der Pedalkraft und dem Pedalweg $S_{Pedal}$, wird im Wesentlichen durch die Simulatorfeder 21 (vorzugsweise eine progressive Druckfeder, andere Federelemente sind denkbar, z.B. eine Elastomerfeder) des Pedalwegsimulators 19 bestimmt. Das Schluckvolumen des Pedalwegsimulators 19 hängt linear von dem Pedalweg $S_{Pedal}$ ab. Ebenso stehen die Pedalkraft und der Druck im Pedalwegsimulator 19 in einem linearen Zusammenhang. Entsprechend ergibt sich eine Kennlinie 40, welche den Druck im Pedalwegsimulator 19, welcher dem mittels Drucksensor 15 messbaren Druck $P_{THZ}$ entspricht, in Abhängigkeit von dem Pedalweg $S_{Pedal}$ beschreibt. Diese nominelle Kennlinie 40, welche die Normalbremsfunktion ("Brake-by-wire"-Betriebsart, erster Betriebsmodus $Z_A$) darstellt, ist in der elektronischen Steuer- und Regeleinheit 7 abgelegt.

In der hydraulischen Rückfallebene (zweiter Betriebsmodus $Z_P$) sind die Ventile, insbesondere die Ventile 14a, 14b, 20, 27a, 27b, stromlos, und der Fahrer bei einer Betätigung des Bremspedals 1 direkt hydraulisch mit den Radbremsen 6 verbunden. Entsprechend der hydraulischen Auslegung der Bremsanlage und der fahrzeugspezifischen Volumenaufnahme der Radbremsen 6 ergibt sich somit eine andere Pedalkennlinie und der Zusammenhang zwischen dem mittels Drucksensor 15 messbaren Druck $P_{THZ}$ und dem Pedalweg $S_{Pedal}$ wird durch Kennlinie 41 beschrieben. Auch diese nominelle Kennlinie 41, welche den zweiten Betriebsmodus $Z_P$ darstellt, ist in der elektronischen Steuer- und Regeleinheit 7 abgelegt. Wie aus Fig. 2 zu erkennen ist, sind die Kennlinien der beiden Betriebsmodi $Z_P$ und $Z_A$ signifikant unterschiedlich.

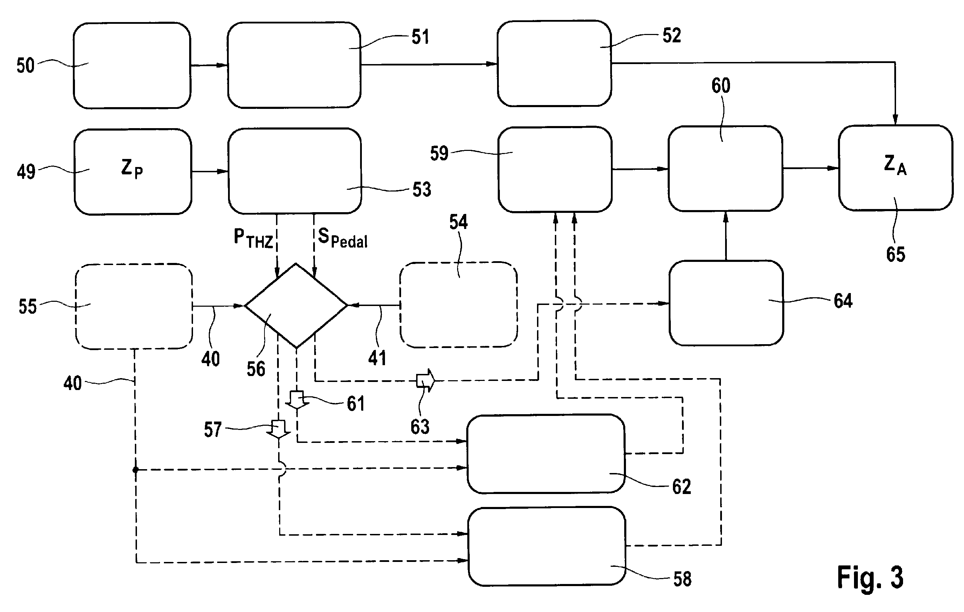

In Fig. 3 ist ein schematisches Ablaufdiagramm zur Veranschaulichung eines beispielgemäßen Verfahrens zum Betrieb einer Bremsanlage dargestellt.

Ist das Fahrzeug zunächst abgestellt oder wird die Bremsanlage nicht mit elektrischer Energie versorgt, so befindet die Bremsanlage in einem Passiv- oder abgeschalteten Zustand 50 (keine Bremspedalbetätigung durch den Fahrer vorausgesetzt). Die Bremsanlage wird üblicherweise z.B. vom Fahrer durch das Einschalten der Motorzündung oder im Vorfeld durch das Öffnen der Fahrertür (optional mittels entsprechender Umfeldsensorik z.B. Keyless-Entry) gestartet. Es wird zunächst in Block 51 eine Initialisierung der Sensoren der Bremsanlage, beispielsgemäß der Drucksensoren 15, 30, 31 und der Lagesensoren 17, 24, durchgeführt, so dass diese nach der Initialisierung Messwerte bereitstellen. In Block 52 werden die entsprechenden Ventile, beispielsgemäß die Trennventile 14a, 14b, das Simulatorfreigabeventil 20 und die Zuschaltventile 27a, 27b, sowie die Bremskraftverstärkungsfunktion aktiviert, so dass im Falle einer Betätigung des Bremspedals durch den Fahrer eine "Brake-by-wire"-Bremsung durchgeführt werden kann. Die Bremsanlage befindet sich dann in einen betriebsbereiten Aktiv-Zustand (erster Betriebsmodus $Z_A$, Block 65), in welchem bei betätigtem Bremspedal 1 die Trennventile 14a, 14b der Betätigungseinrichtung 2 geschlossen, das Simulatorfreigabeventil 20 und die Zuschaltventile 27a, 27b der Druckbereitstellungseinrichtung 4 geöffnet sind. Der Fahrer ist dann nicht direkt hydraulisch mit den Bremskreisen I, II bzw. Radbremsen 6 verbunden, sondern betätigt den Pedalwegsimulator 19, während die Bremskreise I, II durch die Druckbereitstellungseinrichtung 4 mit dem Druck $P_{soll}$ (gemäß einer vorgegebenen Bremskraftverstärkungsfunktion) beaufschlagt werden. Der Initialisierungspfad ohne Fahrerbetätigung (Blöcke 50, 51, 52, 65) ist generell der Regelfall, d.h. die Ventile 14a, 14b, 20, 27a, 27b werden direkt bestromt und die Durckbereitstellungseinrichtung 4 ist aktiviert.

Ist das Fahrzeug abgestellt (oder wird die Bremsanlage nicht mit elektrischer Energie versorgt) und betätigt der Fahrer das Bremspedal 1, so befindet sich die Bremsanlage in dem zweiten Betriebsmodus $Z_P$ (Rückfallbetriebsart). Wird nun die Motorzündung eingeschaltet (oder wird die Bremsanlage wieder mit elektrischer Energie versorgt), so wird die Bremsanlage entsprechend dem im Folgenden beschriebenen beispielsgemäßen Verfahren in den ersten Betriebsmodus $Z_A$ (Block 65) überführt, wobei ein Vorteil des Verfahrens ist, dass die Überführung möglichst komfortabel und ohne Irritation des Fahrers durchgeführt wird.

Im Weiteren wird beispielsgemäß zwischen den folgenden zwei Fällen unterschieden:

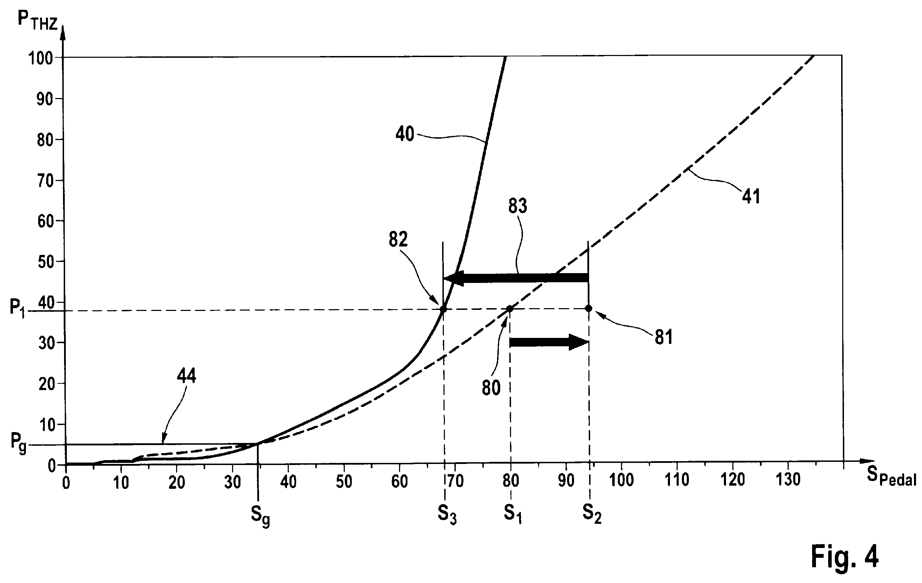

Der erste Fall betrifft die Situation, dass der Fahrer das Bremspedal während eines Passiv- oder abgeschalteten Zustands betätigt und dann die Bremsanlage gestartet bzw. initialisiert wird, während der Fahrer das Bremspedal weiter betätigt. Dies entspricht z.B. dem Fall, dass der Fahrer im abgestellten Fahrzeug sitzt, das Bremspedal betätigt und dann die Zündung einschaltet. Zur Veranschaulichung des ersten Falles ist in Fig. 4 ein beispielhaftes Diagramm für den Pedalweg $S_{Pedal}$ und den zugehörigen Druck $P_{THZ}$ dargestellt.

Betätigt also der Fahrer das Bremspedal während eines Passiv- oder abgeschalteten Zustands (d.h. ohne vorherige Initialisierung der Bremsanlage), so befindet sich die Bremsanlage in dem zweiten Betriebsmodus $Z_P$ (Rückfallbetriebsart) und es ist die Kennlinie 41 der Fig. 4 wirksam. Der Pedalweg $S_{Pedal}$ und zugehörige Systemdruck in den Bremskreisen I, II, welcher aufgrund der geöffneten Trennventile 14a, 14b dem Druck $P_{THZ}$ des Hauptbremszylinders 12 entspricht, stellen sich entsprechend der Volumenaufnahme der Radbremsen 6 und der über den Fahrer eingebrachten Pedalkraft auf den Punkt 80 ($S_1$, $P_1$) ein. Wird nun die Bremsanlage, z. B. vom Fahrer durch die Motorzündung, gestartet, so wird zunächst in Block 53 der Fig. 3 eine Initialisierung der Sensoren und der ECU 7 der Bremsanlage durchgeführt, so dass danach Messwerte des Drucksensors 15 für den Druck $P_{THZ}$ und Messwerte des Weg-/Lagesensors 17 für den Pedalweg $S_{Pedal}$ zur Verfügung stehen. Dann wird in Block 53 das Simulatorfreigabeventil 20 geöffnet, so dass der Pedalwegsimulator 19 zugeschaltet wird. Die Ventile 14a, 14b, 27a, 27b bleiben zunächst stromlos. Durch das Zuschalten des Pedalwegsimulators 19 verlängert sich der Pedalweg $S_{Pedal}$ bei gleichbleibender Pedalkraft durch den Fahrer (d.h. gleichbleibendem Druck $P_1$ in Fig. 4) um das Aufnahmevolumen des Pedalwegsimulators 19, d.h. der Pedalweg verlängert sich von $S_1$ nach $S_2$ in Fig. 4.

Die Lage des sich einstellenden Punkts 81 ($S_2$, $P_1$) relativ zu den beiden nominellen Kennlinien 40, 41 wird in Block 56 durch eine Plausibilisierung bzw. einen Vergleich anhand der aktuellen Messwerte der Sensoren 15 und 17 ($P_{THZ}$ und $S_{Pedal}$) sowie der in Block 54 abgelegten Kennlinie 41 für den zweiten Betriebsmodus $Z_P$ und der in Block 55 abgelegten Kennlinien 40 für den zweiten Betriebsmodus $Z_A$ überprüft. Wird in Block 56 erkannt, dass der sich einstellende Punkt 81 ($S_2$, $P_1$) unterhalb der beiden nominellen Kennlinien 40, 41 liegt, so wird eine aktive Pedalkorrektur, z.B. mittels der Druckbereitstellungseinrichtung 4, durchgeführt (Zweig 57 zu Block 58).

Hierzu werden in Block 58 zunächst vorzugsweise die Zuschaltventile 27a, 27b geöffnet, so dass die Druckbereitstellungseinrichtung 4 mit den Bremskreisen I, II, und damit auch mit dem Hauptbremszylinder 12, hydraulisch verbunden ist. In Block 58 wird weiter die Druckbereitstellungseinrichtung 4 derart angesteuert, dass Druckmittelvolumen aus der Druckbereitstellungseinrichtung 4 über die geöffneten Zuschaltventile 27a, 27b und Trennventile 14a, 14b in die Druckkammern 10, 11 des Hauptbremszylinder 12 verschoben wird, so dass das Bremspedal 1 gegen die einwirkende Pedalkraft des Fahrers, d.h. konstanten Druck $P_1$, zurückgestellt wird. Das Zurückstellen des Bremspedals 1 (der Padalkorrekturweg) wird in Fig. 4 durch den Pfeil 83 dargestellt. Bremspedal 1 wird auf den nominellen Punkt 82 der Kennlinie 40 des ersten Betriebsmodus $Z_A$ ("Brake-by-wire"-Betriebsart) eingestellt, so dass die eingestellte Pedalposition dem sich aus der Kennlinie 40 ergebenden Pedalweg $S_3$ für den (System)Druck $P_1$ entspricht. Die Pedalposition wird mittels des Sensors 17 überprüft.

Nach Beendigung der Pedalkorrektur (Block 58) wird in Block 59 der Hauptbremszylinder 12 durch Schließen der Trennventile 14a, 14b von den Bremskreisen I, II getrennt. In Block 60 wird dann die Bremskraftverstärkung langsam angehoben, bis sich die Bremsanlage dann in Block 65 in dem ersten Betriebsmodus $Z_A$ ("Brake-by-wire"-Betriebsart mit Bremskraftverstärkung) befindet.

Durch die oben beschriebene Vorgehensweise mit Bremspedalkorrektur wird die Bremsanlage schnell, komfortabel und ohne Irritation des Fahrers während einer Bremspedalbetätigung aus dem zweiten Betriebsmodus in den ersten Betriebsmodus überführt. Insbesondere wird durch die Pedalkorrektur die Bremsanlage fast unmerklich für den Fahrer aus dem Zustand des Punkts 81 in den "Brake-by-wire"-Betriebszustand überführt, welcher dem Punkt 82 auf der für den Fahrer gewohnten Kennlinie 40 des ersten Betriebsmodus entspricht.

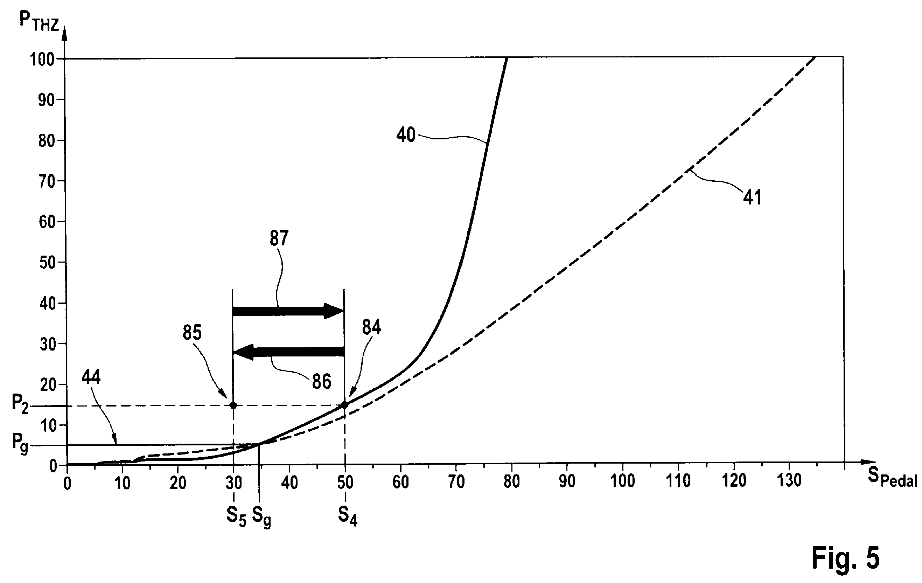

Der zweite Fall betrifft die Situation, dass der Fahrer das Bremspedal in der "Brake-by-wire"-Betriebsart betätigt, die Bremsanlage in die Rückfallbetriebsart übergeht (z.B. wegen eines kurzzeitigen Stromausfalls der Bremsanlage) und dann ein Neustart bzw. eine Initialisierung der Bremsanlage durchgeführt wird, während der Fahrer auf dem Bremspedal stehen bleibt. Zur Veranschaulichung des zweiten Falles ist in Fig. 5 ein beispielhaftes Diagramm für den Pedalweg $S_{Pedal}$ und den zugehörigen Druck $P_{THZ}$ dargestellt.

Erfolgt ein Neustart der Bremsanlage während einer durch eine Bremspedalbetätigung initiierten "Brake-by-wire"-Bremsung mit Bremskraftverstärkung (z.B. hervorgerufen durch einen kurzzeitigen Stromausfall), so sind alle Ventile, insbesondere die Ventile 14a, 14b, 20, 27a, 27b, sowie die Druckbereitstellungseinrichtung 4 der Bremsanlage für eine begrenzte Zeit ohne elektrische Energieversorgung, d.h. stromlos. Die Bremsanlage fällt also aus dem ersten Betriebsmodus mit Fahrerbetätigung in die hydraulische Rückfallebene zurück, d. h. in den zweiten Betriebsmodus $Z_P$ bei Fahrerbetätigung.

In dem ersten Betriebsmodus, d.h. vor dem Umschalten in die hydraulische Rückfallebene, ist der Hauptbremszylinder 12 mit dem Pedalwegsimulator 19 verbunden und es ist die Kennlinie 40 der Fig. 5 wirksam. Entsprechend der vom Fahrer aufgebrachten Pedalkraft liegen also der Druck $P_2$ am Hauptbremszylinder 12 bzw. Pedalwegsimulator 19 und der Pedalweg $S_4$ vor (Punkt 84). In den Bremskreisen I, II besteht aufgrund der Bremskraftverstärkungsfunktion der Druckbereitstellungseinrichtung 4 ein höheres (System)Druckniveau. Beim Übergang in den zweiten Betriebsmodus $Z_P$ wird durch das Schließen der Ventile 20, 27a, 27b und das Öffnen der Trennventile 14a, 14b das Bremspedal 1 aus seiner Pedalposition $S_4$ bei gleichbleibender Pedalkraft, d.h. gleichem Druck $P_2$, solange durch das Überschussvolumen in den Radbremsen 6 zurückgedrückt, bis ein entsprechender Druckausgleich erfolgt ist. Dies ist in Fig. 5 durch den Pfeil 86 angedeutet. Es stellt sich somit der Pedalweg $S_5$ ein. Gleichzeitig wird Kolben 22 durch Feder 33 in seine hydraulische Nulllage zurückgestellt. Druckraum 25 wird dabei über das Rückschlagventil/Nachsaugventil 34 befüllt.

Ist dann die elektrische Energieversorgung wieder vorhanden, so wird zunächst in Block 53 der Fig. 3 eine Initialisierung der Sensoren und der ECU 7 der Bremsanlage durchgeführt, so dass danach wieder Messwerte des Drucksensors 15 und Messwerte des Weg-/Lagesensors 17 zur Verfügung stehen. Auch wird in Block 53 das Simulatorfreigabeventil 20 wieder geöffnet. Die Ventile 14a, 14b, 27a, 27b bleiben zunächst stromlos.

In Block 56 kann nun durch eine Plausibilisierung bzw. einen Vergleich anhand der aktuellen Messwerte der Sensoren 15 und 17 ($P_{THZ}$ und $S_{Pedal}$) sowie der in den Blöcken 54 bzw. 55 abgelegten Kennlinien 41 bzw. 40 erkannt werden, dass der sich eingestellte Punkt 85 ($S_5$, $P_2$) oberhalb der nominellen Kennlinien 40 liegt. Ist dies der Fall, so wird eine aktive Pedalkorrektur, z.B. mittels der Auslassventile 29a-d, durchgeführt (Zweig 61 zu Block 62).

Die Pedalkorrektur in Block 62 erfolgt beispielsgemäß durch das Öffnen der den Radbremsen 6 zugeordneten Auslassventile 29a-d. Das über die Radbremsen 6 zuvor eingespeiste Überschussvolumen wird über die Auslassventile 29a-d solange in den Druckmittelvorratsbehälter 3 abgelassen, bis der Pedalweg des Bremspedals 1 wieder dem entsprechenden Wert $S_4$ der nominellen Kennlinie 40 entspricht. Auch werden in Block 62 die Zuschaltventile 27a, 27b geöffnet, damit die Druckbereitstellungseinrichtung 4 mit den Bremskreisen I, II verbunden ist.

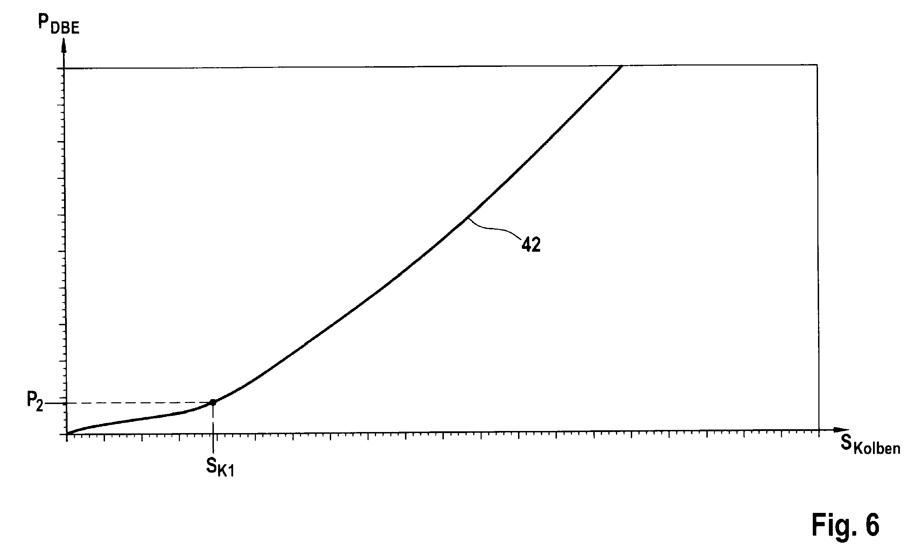

Zeitgleich wird der Kolben 22 der Druckbereitstellungseinrichtung 4 auf eine Kolbenposition $S_{Kolben}$ eingestellt, welche einem Druck der Druckbereitstellungseinrichtung 4 gleich dem Druck $P_{THZ}$ im Hauptbremszylinder 12 ($P_{THZ}=P_2$) entspricht. Hierzu ist eine Druck-Weg-Kennlinie 42 der Druckbereitstellungseinrichtung 4 in der Steuer- und Regeleinheit 7 abgelegt. Eine beispielhafte Kennlinie 42 zur Beschreibung des Zusammenhangs zwischen Kolbenposition $S_{Kolben}$ und Druck $P_{DBE}$ der Druckbereitstellungseinrichtung 4 ist in Fig. 6 schematisch dargestellt. Dem Druck $P_{DBE}=P_2$ entspricht eine Kolbenposition $S_{K1}$. Eine Überprüfung der Kolbenposition $S_{Kolben}$ kann mittels des Sensors 24 erfolgen.

Sind Pedalkorrektur und Einstellung des Kolbens 22 abgeschlossen, so werden in Block 59 die Trennventile 14a, 14b geschlossen und dann in Block 60 die Bremskraftverstärkung langsam entsprechend des Fahrerwunsches angehoben, bis sich die Bremsanlage wieder in dem ersten Betriebsmodus $Z_A$ ("Brake-by-wire"-Betriebsart mit Bremskraftverstärkung) befindet.

Ergänzend zu den beiden oben beschriebenen Fällen (erster und zweiter Fall) wird in Fällen, in denen die Betätigung des Bremspedals 1 durch den Fahrer gering ist, keine Pedalkorrektur durchgeführt. Hierzu wird in Block 56 überprüft, ob sich der aktuelle Pedalweg $S_{Pedal}$ bzw. der aktuelle Betriebspunkt ($S_{Pedal}$, $P_{THZ}$) der Bremsanlage unterhalb eines vorgegebenen Schwellenwertes $S_g$ bzw. innerhalb eines vorgegebenen Kennfeldbereichs 44, welches z.B. durch zwei Schwellenwerte $S_g$ und $P_g$ definiert ist, befindet (siehe Fig. 4 und 5). Befindet sich der Pedalweg $S_{Pedal}$ unterhalb des Schwellenwertes $S_g$ bzw. der Betriebspunkt ($S_{Pedal}$, $P_{THZ}$) innerhalb des Kennfeldbereichs 44, so weicht der tatsächliche Pedalweg nur sehr wenig bzw. akzeptabel von dem Pedalweg gemäß der nominellen Kennlinie 40 ab. Es werden dann direkt (Zweig 63 in Fig. 3), ohne Pedalkorrektur, in Block 64 die Trennventile 14a, 14b geschlossen und die Zuschaltventile 27a, 27b geöffnet. Anschließend erfolgt, wie für den ersten und den zweiten Fall bereits oben ausgeführt, in Block 60 eine langsame Anhebung der Bremskraftverstärkung mittels der Druckbereitstellungseinrichtung 4. Die Bremsanlage befindet sich dann in dem ersten Betriebsmodus $Z_A$ ("Brake-by-wire"-Betriebsart mit Bremskraftverstärkung, Normalbremsfunktion). Nach einem anschließenden Lösen des Bremspedals 1 stellt sich die Bremsanlage durch Nachsaugen des fehlenden (geringen) Volumens (über die Verbindung der Druckkammern 10, 11 mit dem Druckmittelvorratsbehälter 3) wieder auf die nominelle Kennlinie 40 ein.

## Patentansprüche

1. Verfahren zum Betrieb einer Bremsanlage für Kraftfahrzeuge mit

- einem mittels eines Bremspedals (1) betätigbaren Hauptbremszylinder (12), welcher mit zumindest einem Bremskreis (I, II) mit zumindest einer hydraulisch betätigbaren Radbremse (6) trennbar (14a, 14b) verbunden ist, wobei eine einen Druck im Hauptbremszylinder (12) charakterisierende erste Größe ($P_{THZ}$) und eine einen Betätigungsweg des Bremspedals (1) charakterisierende zweite Größe ($S_{Pedal}$) zumindest zeitweise gemessen werden,
- einem hydraulisch betätigbaren, mit dem Hauptbremszylinder (12) verbundenen oder verbindbaren Pedalwegsimulator (19), welcher mittels eines Simulator-Freigabeventils (20) an- und abschaltbar ausgeführt ist,
- einer elektrisch steuerbaren Druckbereitstellungseinrichtung (4), welche mit dem Bremskreis (I, II) trennbar (27a, 27b) verbunden ist, und welche insbesondere durch eine Zylinder-Kolben-Anordnung gebildet wird, deren Kolben (22) durch einen elektromechanischen Aktuator (23) betätigbar ist, und
- einer elektronischen Steuer- und Regeleinheit (7) zur Ansteuerung der elektrisch steuerbaren Druckbereitstellungseinrichtung (4) sowie von Ventilen (20, 14a, 14b, 27a, 27b, 28a-d, 29a-d) der Bremsanlage,

wobei bei einer Betätigung des Bremspedals (1) der Bremskreis (I, II) in einem ersten Betriebsmodus ($Z_A$) mit einem Druck ($P_{Soll}$) der Druckbereitstellungseinrichtung (4) und in einem zweiten Betriebsmodus ($Z_P$) mit dem Druck ($P_{THZ}$) des Hauptbremszylinders (12) beaufschlagt wird, **dadurch gekennzeichnet, dass** bei einem Übergang von dem zweiten Betriebsmodus ($Z_P$) in den ersten Betriebsmodus ($Z_A$) während einer Betätigung des Bremspedals (1) der Betätigungsweg ($S_{Pedal}$) des Bremspedals (1) elektronisch gesteuert oder geregelt verstellt wird.

2. Verfahren nach Anspruch 1, **dadurch gekennzeichnet, dass** bei dem Übergang von dem zweiten Betriebsmodus ($Z_P$) in den ersten Betriebsmodus ($Z_A$) während einer Betätigung des Bremspedals (1) der Betätigungsweg ($S_{Pedal}$) des Bremspedals (1) durch elektronisch gesteuertes oder geregeltes Ablassen von Druckmittel aus dem Hauptbremszylinder (62) oder durch elektronisch gesteuertes oder geregeltes Zuführen von Druckmittel in den Hauptbremszylinder (58) verstellt wird.

3. Verfahren nach Anspruch 1 oder 2, **dadurch gekennzeichnet, dass** eine erste Kennlinie (40), welche einen Zusammenhang von erster und zweiter Größe ($P_{THZ}$, $S_{Pedal}$) in dem ersten Betriebsmodus ($Z_A$) beschreibt, und eine zweite Kennlinie (41), welche einen Zusammenhang von erster und zweiter Größe ($P_{THZ}$, $S_{Pedal}$) in dem zweiten Betriebsmodus ($Z_P$) beschreibt, vorgegebenen sind, und dass durch einen Vergleich der aktuellen Werte von erster und zweiter Größe ($P_{THZ}$, $S_{Pedal}$) mit der ersten Kennlinie (40) und/oder der zweiten Kennlinie (41) entschieden wird, ob ein Ablassen oder ein Zuführen von Druckmittel durchgeführt wird.

4. Verfahren nach Anspruch 3, **dadurch gekennzeichnet, dass** der Betätigungsweg ($S_{Pedal}$) durch Zuführen von Druckmittel verringert wird, wenn das Wertepaar aus erster und zweiter Größe ($S_2$, $P_1$) nach einem Zuschalten des Pedalwegsimulators (19) unterhalb der zweiten Kennlinie (41) liegt.

5. Verfahren nach Anspruch 3 oder 4, **dadurch gekennzeichnet, dass** der Betätigungsweg ($S_{Pedal}$) durch Ablassen von Druckmittel vergrößert wird, wenn das Wertepaar aus erster und zweiter Größe ($S_5$, $P_2$) nach einem Zuschalten des Pedalwegsimulators oberhalb der ersten Kennlinie (40) liegt.

6. Verfahren nach einem der Ansprüche 3 bis 5, **dadurch gekennzeichnet, dass** der Betätigungsweg ($S_{Pedal}$) auf einen Wert ($S_3$, $S_4$) entsprechend der ersten Kennlinie (40) verstellt wird.

7. Verfahren nach einem der vorherigen Ansprüche, **dadurch gekennzeichnet, dass** bei dem Übergang von dem zweiten ($Z_P$) in den ersten ($Z_A$) Betriebsmodus zunächst die Sensoren (15, 17) zur Messung der erste und der zweiten Größe ($P_{THZ}$, $S_{Pedal}$) initialisiert werden und danach der Pedalwegsimulator mittels des Simulator-Freigabeventils (20) angeschaltet wird (53), und dass insbesondere danach das Verstellen des Betätigungswegs ($S_{Pedal}$) des Bremspedals (1) durchgeführt wird.

8. Verfahren nach einem der vorherigen Ansprüche, **dadurch gekennzeichnet, dass** der Betätigungsweg ($S_{Pedal}$) des Bremspedals (1) dadurch verringert wird (58), dass ein zwischen der Druckbereitstellungseinrichtung (4) und dem Bremskreis (I, II) angeordnetes Zuschaltventil (27a, 27b) geöffnet wird und die Druckbereitstellungseinrichtung (4) derart angesteuert wird, dass Druckmittelvolumen in den Hauptbremszylinder (12) verschoben wird.

9. Verfahren nach einem der vorherigen Ansprüche, **dadurch gekennzeichnet, dass** der Betätigungsweg ($S_{Pedal}$) des Bremspedals (1) dadurch vergrößert wird (62), dass ein zwischen einer Radbremse (6) und einem Druckmittelvorratsbehälter (3) angeordnetes Auslassventil (29a, 29b) geöffnet wird.

10. Verfahren nach Anspruch 9, **dadurch gekennzeichnet, dass** zusätzlich, insbesondere gleichzeitig, ein zwischen der Druckbereitstellungseinrichtung (4) und dem Bremskreis (I, II) angeordnetes Zuschaltventil (27a, 27b) geöffnet wird.

11. Verfahren nach Anspruch 10, **dadurch gekennzeichnet, dass** die Druckbereitstellungseinrichtung (4) durch eine Zylinder-Kolben-Anordnung gebildet wird, deren Kolben (22) durch einen elektromechanischen Aktuator (23) betätigbar ist, und dass zusätzlich, insbesondere gleichzeitig, der Kolben (22) der Druckbereitstellungseinrichtung (4) auf eine, insbesondere gemäß einer vorgegebenen Kolbenposition-Druck-Kennlinie (42), vorbestimmte Kolbenposition ($S_{K1}$) eingestellt wird.

12. Verfahren nach einem der vorherigen Ansprüche, **dadurch gekennzeichnet, dass** nach dem Verstellen des Betätigungswegs ($S_{Pedal}$) des Bremspedals (1) ein zwischen dem Hauptbremszylinder (12) und dem Bremskreis (I, II) angeordnetes Trennventil (14a, 14b) geschlossen wird (59) und danach durch die Druckbereitstellungseinrichtung (4) ein vorbestimmter Solldruck ($P_{Soll}$) eingestellt wird (60), welcher insbesondere anhand der aktuellen Werte der ersten und zweiten Größe ($P_{THZ}$, $S_{Pedal}$) bestimmt wird.

13. Verfahren nach einem der vorherigen Ansprüche, **dadurch gekennzeichnet, dass** bei dem Übergang kein Verstellen des Betätigungswegs ($S_{Pedal}$) des Bremspedals (1) durchgeführt wird, wenn der aktuelle Wert der zweiten Größe ($S_{Pedal}$) kleiner als ein vorgegebener erster Schwellenwert ($S_g$) ist, und insbesondere wenn zusätzlich der aktuelle Wert der ersten Größe ($P_{THZ}$) kleiner als ein vorgegebener zweiter Schwellenwert ($P_g$) ist.

14. Bremsanlage für Kraftfahrzeuge mit

   • einem mittels eines Bremspedals (1) betätigbaren Hauptbremszylinder (12), welcher mit zumindest einem Bremskreis (I, II) mit zumindest einer hydraulisch betätigbaren Radbremse (6) trennbar (14a, 14b) verbunden ist,
• einer Messeinrichtung (15) zur Bestimmung einer einen Druck im Hauptbremszylinder (12) charakterisierenden ersten Größe ($P_{THZ}$) und einer Messeinrichtung (17) zur Bestimmung einer einen Betätigungsweg des Bremspedals (1) charakterisierenden zweiten Größe ($S_{Pedal}$),
• einem hydraulisch betätigbaren, mit dem Hauptbremszylinder (12) verbundenen oder verbindbaren Pedalwegsimulator (19), welcher mittels eines Simulator-Freigabeventils (20) an- und abschaltbar ausgeführt ist,
• einer elektrisch steuerbaren Druckbereitstellungseinrichtung (4), welche mit dem Bremskreis (I, II) trennbar (27a, 27b) verbunden ist, und welche insbesondere durch eine Zylinder-Kolben-Anordnung gebildet wird, deren Kolben (22) durch einen elektromechanischen Aktuator (23) betätigbar ist,
• insbesondere einer Radbremsdruck-Modulationseinheit (5), die je Radbremse (6) ein Einlassventil (28a-d) sowie ein Auslassventil (29a-d) zum Einstellen eines radindividuellen Bremsdrucks aufweist, der aus dem Druck in dem Bremskreis (I, II) abgeleitet wird, und
• einer elektronischen Steuer- und Regeleinheit (7) zur Ansteuerung der elektrisch steuerbaren Druckbereitstellungseinrichtung (4) sowie von Ventilen (20, 14a, 14b, 27a, 27b, 28a-d, 29a-d) der Bremsanlage,

wobei in einem ersten Betriebsmodus ($Z_A$) bei einer Betätigung des Bremspedals (1) der Bremskreis (I, II) mit einem Druck ($P_{Soll}$) der Druckbereitstellungseinrichtung (4) beaufschlagt wird und wobei in einem zweiten Betriebsmodus ($Z_P$) bei einer Betätigung des Bremspedals (1) der Bremskreis (I, II) mit dem Druck ($P_{THZ}$) des Hauptbremszylinders (12) beaufschlagt wird,
**dadurch gekennzeichnet, dass**
die Steuer- und Regeleinheit (7) bei einem Übergang von dem zweiten Betriebsmodus ($Z_P$) in den ersten Betriebsmodus ($Z_A$) während einer Betätigung des Bremspedals (1) ein Verstellen des Betätigungswegs ($S_{Pedal}$) des Bremspedals (1) durchführt.

15. Bremsanlage mit einer elektronischen Steuer- und Regeleinheit (7), insbesondere nach Anspruch 14, **dadurch gekennzeichnet, dass** in der elektronischen Steuer- und Regeleinheit (7) ein Verfahren gemäß einem der Ansprüche 1 bis 13 durchgeführt wird.

**Claims**

1. Method for operating a brake system for motor vehicles, comprising:

• a master brake cylinder (12) which can be actuated by means of a brake pedal (1) and which is separably (14a, 14b) connected to at least one brake circuit (I, II) with at least one hydraulically actuable wheel brake (6), wherein a first variable ($P_{THZ}$) which characterizes a pressure in the master brake cylinder (12) and a second variable ($S_{Pedal}$) which characterizes an actuation travel of the brake pedal (1) are measured at least from time to time,
• a hydraulically actuable pedal travel simulator (19) which is or can be connected to the master brake cylinder (12) and which is designed so as to be capable of being switched on and off by means of a simulator release valve (20),
• an electrically controllable pressure supply device (4) which is separably (27a, 27b) connected to the brake circuit (I, II) and which is formed, in particular, by a cylinder-piston arrangement whose piston (22) can be actuated by an electromechanical actuator (23), and
• an electronic open-loop and closed-loop control unit (7) for activating the electrically controllable pressure supply device (4) and valves (20, 14a, 14b, 27a, 27b, 28a-d, 29a-d) of the brake system,

wherein, when the brake pedal (1) is actuated, in a first operating mode ($Z_A$) the brake circuit (I, II) is provided with a pressure ($P_{Setp}$) of the pressure supply device (4), and in a second operating mode ($Z_P$) it is provided with the pressure ($P_{THZ}$) of the master brake cylinder (12),
**characterized in that**
in the case of a changeover from the second operating mode ($Z_P$) into the first operating mode ($Z_A$) during actuation of the brake pedal (1) the actuation travel ($S_{Pedal}$) of the brake pedal (1) is adjusted under electronic open-loop or closed-loop control.

2. Method according to Claim 1, **characterized in that** in the case of the changeover from the second operating mode ($Z_P$) into the first operating mode ($Z_A$) during actuation of the brake pedal (1) the actuation travel ($S_{Pedal}$) of the brake pedal (1) is adjusted by discharging pressure medium, under electronic open-loop or closed-loop control, from the master brake cylinder (62) or by feeding pressure medium into the master brake cylinder (58) under electronic open-loop or closed-loop control.

3. Method according to Claim 1 or 2, **characterized in that** a first characteristic curve (40), which describes a relationship between a first and second variable ($P_{THZ}$, $S_{Pedal}$) in the first operating mode ($Z_A$), and a second characteristic curve (41) which describes a relationship between the first and second variables ($P_{THZ}$, $S_{Pedal}$) in the second operating mode ($Z_P$), are predefined, and **in that** by comparing the current values of the first and second variables ($P_{THZ}$, $S_{Pedal}$) with the first characteristic curve (40) and/or the second characteristic curve (41) it is decided whether pressure medium will be discharged or fed in.

4. Method according to Claim 3, **characterized in that** the actuation travel ($S_{Pedal}$) is reduced by feeding in pressure medium if the value pair composed of the first and second variables ($S_2$, $P_1$) is below the second characteristic curve (41) after the pedal travel simulator (19) is activated.

5. Method according to Claim 3 or 4, **characterized in that** the actuation travel ($S_{Pedal}$) is increased by discharging pressure medium if the value pair composed of the first and second variables ($S_5$, $P_2$) is above the first characteristic curve (40) after the pedal travel simulator is activated.

6. Method according to one of Claims 3 to 5, **characterized in that** the actuation travel ($S_{Pedal}$) is adjusted to a value ($S_3$, $S_4$) in accordance with the first characteristic curve (40).

7. Method according to one of the preceding claims, **characterized in that** in the case of the changeover from the second operating mode ($Z_P$) into the first operating mode ($Z_A$), the sensors (15, 17) for measuring the first and second variables ($P_{THZ}$, $S_{Pedal}$) are firstly initialized and then the pedal travel simulator is switched on (53) by means of the simulator release valve (20), and **in that** in particular afterwards the adjustment of the actuation travel ($S_{Pedal}$) of the brake pedal (1) is carried out.

8. Method according to one of the preceding claims, **characterized in that** the actuation travel ($S_{Pedal}$) of the brake pedal (1) is reduced (58) **in that** an activation valve (27a, 27b) which is arranged between the pressure supply device (4) and the brake circuit (I, II) is opened, and the pressure supply device (4) is activated in such a way that pressure medium volume is forced into the master brake cylinder (12).

9. Method according to one of the preceding claims, **characterized in that** the actuation travel ($S_{Pedal}$) of the brake pedal (1) is increased (62) **in that** an outlet valve (29a, 29b) which is arranged between a wheel brake (6) and a pressure medium reservoir container (3) is opened.

10. Method according to Claim 9, **characterized in that** in addition, in particular simultaneously, an activation valve (27a, 27b) which is arranged between the pressure supply device (4) and the brake circuit (I, II) is opened.

11. Method according to Claim 10, **characterized in that** the pressure supply device (4) is formed by a cylinder-piston arrangement whose piston (22) can be actuated by an electromechanical actuator (23), and **in that** in addition, in particular simultaneously, the piston (22) of the pressure supply device (4) is set to a piston position ($S_{K1}$) which is predetermined, in particular, according to a predefined piston position pressure characteristic curve (42).

12. Method according to one of the preceding claims, **characterized in that** after the adjustment of the actuation travel ($S_{Pedal}$) of the brake pedal (1) an isolating valve (14a, 14b) which is arranged between the master brake cylinder (12) and the brake circuit (I, II) is closed (59), and then a predetermined setpoint pressure ($P_{Setp}$) is set (60) by the pressure supply device (4), which setpoint pressure ($P_{Setp}$) is determined, in particular, on the basis of the current values of the first and second variables ($P_{THZ}$, $S_{Pedal}$).

13. Method according to one of the preceding claims, **characterized in that** in the case of the changeover the actuation travel ($S_{Pedal}$) of the brake pedal (1) is not adjusted if the current value of the second variable ($S_{Pedal}$) is lower than a predefined first threshold value ($S_g$) and, in particular, if in addition the current value of the first variable ($P_{THZ}$) is lower than a predefined second threshold value ($P_g$).

14. Brake system for motor vehicles, comprising

- a master brake cylinder (12) which can be actuated by means of a brake pedal (1) and which is separably (14a, 14b) connected to at least one brake circuit (I, II) with at least one hydraulically actuable wheel brake (6),
- a measuring device (15) for determining a first variable ($P_{THZ}$) which characterizes a pressure in the master brake cylinder (12), and a measuring device (17) for determining a second variable ($S_{Pedal}$) which characterizes an actuation travel of the brake pedal (1),
- a hydraulically actuable pedal travel simulator (19) which is or can be connected to the master brake cylinder (12) and which is designed so as to be capable of being switched on and off by means of a simulator release valve (20),
- an electrically controllable pressure supply device (4) which is separably (27a, 27b) connected to the brake circuit (I, II) and which is formed, in particular, by a cylinder-piston arrangement whose piston (22) can be actuated by an electromechanical actuator (23),
- in particular a wheel brake pressure modulation unit (5) which has, per wheel brake (6), an inlet valve (28a-d) and an outlet valve (29a-d) for setting a wheel-specific brake pressure which is derived from the pressure in the brake circuit (I, II), and

• an electronic open-loop and closed-loop control unit (7) for activating the electrically controllable pressure supply device (4) and valves (20, 14a, 14b, 27a, 27b, 28a-d, 29a-d) of the brake system,

wherein in a first operating mode ($Z_A$) when the brake pedal (1) is actuated a pressure ($P_{Setp}$) of the pressure supply device (4) is applied to the brake circuit (I, II), and wherein in a second operating mode ($Z_P$) when the brake pedal (1) is actuated the pressure ($P_{THZ}$) of the master brake cylinder (12) is applied to the brake circuit (I, II),
**characterized in that**
in the case of a changeover from the second operating mode ($Z_P$) into the first operating mode ($Z_A$) during actuation of the brake pedal (1) the open-loop and closed-loop control unit (7) carries out adjustment of the actuation travel ($S_{Pedal}$) of the brake pedal (1).

15. Brake system having an electronic open-loop and closed-loop control unit (7), in particular according to Claim 14, **characterized in that** a method according to one of Claims 1 to 13 is carried out in the electronic open-loop and closed-loop control unit (7).

**Revendications**

1. Procédé pour faire fonctionner un système de freinage pour véhicules automobiles, comprenant :

• un maître-cylindre de frein (12) pouvant être actionné au moyen d'une pédale de frein (1), lequel est relié de manière séparable (14a, 14b) à au moins un circuit de frein (I, II) comprenant au moins un frein de roue (6) pouvant être actionné hydrauliquement, une première grandeur ($P_{THZ}$) caractérisant une pression dans le maître-cylindre de frein (12) et une deuxième grandeur ($S_{Pedal}$) caractérisant une course d'actionnement de la pédale de frein (1) étant mesurées au moins temporairement,
• un simulateur de course de pédale (19) pouvant être actionné hydrauliquement, relié ou pouvant être relié au maître-cylindre de frein (12), lequel est réalisé pour pouvoir être mis en circuit et hors circuit au moyen d'une vanne de libération de simulateur (20),
• un appareil de fourniture de pression (4) à commande électrique qui est relié de manière séparable (27a, 27b) au circuit de frein (I, II) et qui est notamment formé par un arrangement de cylindre-piston dont le piston (22) peut être actionné par un actionneur électromécanique (23), et
• une unité de commande et de régulation électronique (7) destinée à commander l'appareil de fourniture de pression (4) à commande électrique ainsi que des vannes (20, 14a, 14b, 27a, 27b, 28a-d, 29a-d) du système de freinage,

lors d'un actionnement de la pédale de frein (1), le circuit de frein (I, II) dans un premier mode de fonctionnement ($Z_A$) étant chargé avec une pression ($P_{soll}$) de l'appareil de fourniture de pression (4) et, dans un deuxième mode de fonctionnement ($Z_P$), étant chargé avec la pression ($P_{THZ}$) du maître-cylindre de frein (12),
**caractérisé en ce que**
lors d'un passage du deuxième mode de fonctionnement ($Z_P$) au premier mode de fonctionnement ($Z_A$) pendant un actionnement de la pédale de frein (1), la course d'actionnement ($S_{Pedal}$) de la pédale de frein (1) étant modifiée par commande ou régulation électronique.

2. Procédé selon la revendication 1, **caractérisé en ce que** lors du passage du deuxième mode de fonctionnement ($Z_P$) au premier mode de fonctionnement ($Z_A$) pendant un actionnement de la pédale de frein (1), la course d'actionnement ($S_{Pedal}$) de la pédale de frein (1) est modifiée par une évacuation à commande ou régulation électronique de fluide sous pression hors du maître-cylindre de frein (62) ou par acheminement à commande ou régulation électronique de fluide sous pression dans le maître-cylindre de frein (58).

3. Procédé selon la revendication 1 ou 2, **caractérisé en ce qu'**une première courbe caractéristique (40), laquelle décrit une relation entre une première et une deuxième grandeur ($P_{THZ}$, $S_{Pedal}$) dans le premier mode de fonctionnement ($Z_A$), et une deuxième courbe caractéristique (41), laquelle décrit une relation entre une première et une deuxième grandeur ($P_{THZ}$, $S_{Pedal}$) dans le deuxième mode de fonctionnement ($Z_P$), sont prédéfinies, et qu'une décision d'évacuation ou d'acheminement de fluide sous pression est prise par le biais d'une comparaison des valeurs actuelles des première et deuxième grandeurs ($P_{THZ}$, $S_{Pedal}$) avec la première courbe caractéristique (40) et/ou la deuxième courbe caractéristique (41).

4. Procédé selon la revendication 3, **caractérisé en ce que** la course d'actionnement ($S_{Pedal}$) est réduite par acheminement de fluide sous pression lorsque la paire de valeurs constituée des première et deuxième grandeurs ($S_2$, $P_1$) se trouve au-dessus de la deuxième courbe caractéristique (41) après une mise en circuit du simulateur de course de pédale (19).

5. Procédé selon la revendication 3 ou 4, **caractérisé en ce que** la course d'actionnement ($S_{Pedal}$) est agrandie par évacuation de fluide sous pression lorsque la paire de valeurs constituée des première et deuxième grandeurs ($S_5$, $P_2$) se trouve au-dessus de la première courbe caractéristique (40) après une mise en circuit du simulateur de course de pédale.

6. Procédé selon l'une des revendications 3 à 5, **caractérisé en ce que** la course d'actionnement ($S_{Pedal}$) est modifiée à une valeur ($S_3$, $S_4$) conformément à la première courbe caractéristique (40).

7. Procédé selon l'une des revendications précédentes, **caractérisé en ce que** lors du passage du deuxième mode de fonctionnement ($Z_P$) au premier mode de fonctionnement ($Z_A$), les capteurs (15, 17) destinés à mesurer les première et deuxième grandeurs ($P_{THZ}$, $S_{Pedal}$) sont tout d'abord initialisés et le simulateur de course de pédale est ensuite connecté (53) au moyen de la vanne de libération de simulateur (20), et notamment en ce que la modification de la course d'actionnement ($S_{Pedal}$) de la pédale de frein (1) est effectuée ensuite.

8. Procédé selon l'une des revendications précédentes, **caractérisé en ce que** la course d'actionnement ($S_{Pedal}$) de la pédale de frein (1) est réduite (58) **en ce qu'**une vanne de mise en circuit (27a, 27b) disposée entre l'appareil de fourniture de pression (4) et le circuit de frein (I, II) est ouverte et l'appareil de fourniture de pression (4) est commandé de telle sorte que le volume de fluide sous pression est déplacé dans le maître-cylindre de frein (12).

9. Procédé selon l'une des revendications précédentes, **caractérisé en ce que** la course d'actionnement ($S_{Pedal}$) de la pédale de frein (1) est agrandie (62) **en ce qu'**une vanne d'évacuation (29a, 29b) disposée entre un frein de roue (6) et un réservoir à fluide sous pression (3) est ouverte.

10. Procédé selon la revendication 9, **caractérisé en ce qu'**une vanne de mise en circuit (27a, 27b) disposée entre l'appareil de fourniture de pression (4) et le circuit de frein (I, II) est ouverte en plus, notamment simultanément.

11. Procédé selon la revendication 10, **caractérisé en ce que** l'appareil de fourniture de pression (4) est formé par un arrangement de cylindre-piston dont le piston (22) peut être actionné par un actionneur électromécanique (23), et **en ce qu'**en plus, notamment simultanément, le piston (22) de l'appareil de fourniture de pression (4) est réglé à une position de piston ($S_{K1}$) prédéterminée, notamment conformément à une courbe caractéristique prédéfinie de la position du piston en fonction de la pression (42).

12. Procédé selon l'une des revendications précédentes, **caractérisé en ce qu'**après la modification de la course d'actionnement ($S_{Pedal}$) de la pédale de frein (1), une vanne de séparation (14a, 14b) disposée entre le maître-cylindre de frein (12) et le circuit de frein (I, II) est fermée (59) et, ensuite, une pression de consigne ($P_{soll}$) prédéterminée est réglée par l'appareil de fourniture de pression (4), laquelle est déterminée notamment au moyen des valeurs actuelles des première et deuxième grandeurs ($P_{THZ}$, $S_{Pedal}$).

13. Procédé selon l'une des revendications précédentes, **caractérisé en ce que** lors du passage, aucune modification de la course d'actionnement ($S_{Pedal}$) de la pédale de frein (1) n'est effectuée si la valeur actuelle de la deuxième grandeur ($S_{Pedal}$) est inférieure à une première valeur de seuil ($S_g$) prédéfinie et notamment si, en plus de cela, la valeur actuelle de la première grandeur ($P_{THZ}$) est inférieure à une deuxième valeur de seuil ($P_g$) prédéfinie.

14. Système de freinage pour véhicules automobiles, comprenant :

   • un maître-cylindre de frein (12) pouvant être actionné au moyen d'une pédale de frein (1), lequel est relié de manière séparable (14a, 14b) à au moins un circuit de frein (I, II) comprenant au moins un frein de roue (6) pouvant être actionné hydrauliquement,
   • un dispositif de mesure (15) destiné à déterminer une première grandeur ($P_{THZ}$) caractérisant une pression dans le maître-cylindre de frein (12) et un dispositif de mesure (17) destiné à déterminer une deuxième grandeur ($S_{Pedal}$) caractérisant une course d'actionnement de la pédale de frein (1),
   • un simulateur de course de pédale (19) pouvant être actionné hydrauliquement, relié ou pouvant être relié au maître-cylindre de frein (12), lequel est réalisé pour pouvoir être mis en circuit et hors circuit au moyen d'une vanne de libération de simulateur (20),
   • un appareil de fourniture de pression (4) à commande électrique qui est relié de manière séparable (27a, 27b) au circuit de frein (I, II) et qui est notamment formé par un arrangement de cylindre-piston dont le piston (22) peut être actionné par un actionneur électromécanique (23),
   • notamment une unité de modulation de pression de frein de roue (5) qui possède, pour chaque frein de roue (6), une vanne d'entrée (28a-d) ainsi qu'une vanne d'évacuation (29a-d) servant au réglage d'une pression de freinage individuelle de roue, laquelle est dérivée de la pression dans le circuit de frein (I, II), et
• une unité de commande et de régulation électronique (7) destinée à commander l'appareil de fourniture de pression (4) à commande électrique ainsi que les vannes (20, 14a, 14b, 27a, 27b, 28a-d, 29a-d) du système de freinage,

dans un premier mode de fonctionnement ($Z_A$), lors d'un actionnement de la pédale de frein (1), le circuit de frein (I, II) étant chargé avec une pression ($P_{soll}$) de l'appareil de fourniture de pression (4) et, dans un deuxième mode de fonctionnement ($Z_P$), lors d'un actionnement de la pédale de frein (1), le circuit de frein (I, II) étant chargé avec la pression ($P_{THZ}$) du maître-cylindre de frein (12),
**caractérisé en ce que**
l'unité de commande et de régulation (7), lors d'un passage du deuxième mode de fonctionnement ($Z_P$) au premier mode de fonctionnement ($Z_A$) pendant un actionnement de la pédale de frein (1), effectue une modification de la course d'actionnement ($S_{Pedal}$) de la pédale de frein (1).

15. Système de freinage équipé d'une unité de commande et de régulation électronique (7), notamment selon la revendication 14, **caractérisé en ce qu'**un procédé selon l'une des revendications 1 à 13 est mis en oeuvre dans l'unité de commande et de régulation électronique (7).

Fig. 1

**Fig. 2**

EP 2 809 559 B1

Fig. 3

Fig. 4

EP 2 809 559 B1

Fig. 5

EP 2 809 559 B1

Fig. 6

EP 2 809 559 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011029812 A1